**Europäisches Patentamt**

**European Patent Office**

**Office européen des brevets**

(19)

(11) Veröffentlichungsnummer : **0 103 852**
**B1**

# (12) EUROPÄISCHE PATENTSCHRIFT

(45) Veröffentlichungstag der Patentschrift :
**28.05.86**

(51) Int. Cl.⁴ : **F 16 H 19/06**

(21) Anmeldenummer : **83109111.1**

(22) Anmeldetag : **15.09.83**

---

(54) **Linearantrieb.**

---

(30) Priorität : **20.09.82 CH 5522/82**
**22.03.83 DE 3310304**

(43) Veröffentlichungstag der Anmeldung :
**28.03.84 Patentblatt 84/13**

(45) Bekanntmachung des Hinweises auf die Patenterteilung : **28.05.86 Patentblatt 86/22**

(84) Benannte Vertragsstaaten :
**AT BE CH DE FR GB IT LI LU NL SE**

(56) Entgegenhaltungen :
**EP-A- 0 029 188**
**AT-B- 243 038**
**DE-A- 2 725 434**
**DE-C- 680 277**
**FR-A- 2 236 390**
**FR-A- 2 381 171**
**GB-A- 1 452 759**
**GB-A- 1 513 512**
**US-A- 4 120 538**
**SOVIET INVENTIONS ILLUSTRATED, Sektion PQ, Woche C 45, 17. Dezember 1980 DERWENT PUBLICATIONS LTD., London Q 57**
**Firmenprospekt Leibfried Maschinenbau GmbH 7501195.05.06.82**
**Übersicht über Kinematik/Getriebelehre, H3 Knab, 1930, S. 121**

(73) Patentinhaber : **Walter AG**

**CH-8362 Balterswil TG (CH)**

(72) Erfinder : **Horn, Hans**
**Postgasse 46**
**CH-3011 Bern (CH)**

(74) Vertreter : **Reimold, Otto, Dr. Dipl.-Phys. et al**
**Patentanwälte Dipl.-Ing. R. Magenbauer Dipl.-Phys.**
**Dr. O. Reimold Hölderlinweg 58**
**D-7300 Esslingen (DE)**

---

EP 0 103 852 B1

**Beschreibung**

Die Erfindung betrifft einen Linearantrieb mit einem als festen Bezug dienenden Gestell und mit einem z. B. pneumatischen Hubzylinder, der einen linear bewegbaren Mitnehmer in Längsrichtung antreibt, wobei an einem relativ zu dem Gestell beweglichen Antriebsteil des Hubzylinders ein geschlossenes Umschlingungsgetriebe vorgesehen ist, das in festem Abstand zueinander angeordnete Umlenkvorrichtungen, z. B. Rollen, mit quer zu der Zylinderlängsrichtung orientierten Achsen enthält, über die ein Zugmittel läuft, das gegenüber dem Gestell ortsfest ist und am Mitnehmer angelenkt ist.

Nach dem Stand der Technik ist ein derartiger Linearantrieb aus einem Firmenprospekt der Firma Leibfried Maschinenbau GmbH (Nr. 75 01 344.05.06.82) bekannt, der einen « Linearantrieb mit Bremse, Typ LLAB » zeigt. Dieser Gegenstand enthält ein Gehäuse oder Gestell, an dem ein Zylinder festgelegt ist. Die Kolbenstange dieses Hubzylinders dient als Antriebsteil, wobei das aus dem Zylinder herausragende Ende der bewegbaren Kolbenstange ein geschlossenes Umschlingungsgetriebe zur Hubübersetzung trägt. Das Umschlingungsgetriebe enthält zwei Rollenpaare, die an einer sich parallel zum Zylinder erstreckenden Schiene angeordnet sind, welche wiederum an einem Ausleger angeracht ist, der quer zur Längsrichtung des Zylinders vom herausragenden Ende der Kolbenstange absteht. Über die Rollenpaare laufen seitlich von der Schiene mitgeführte Zahnriemen, die einerseits mit dem Gehäuse und andererseits fest mit dem Mitnehmer verbunden sind. Bei dieser bekannten Anordnung werden durch die Anordnung des Umschlingungsgetriebes und des damit angetriebenen Mitnehmers an einem Ausleger der Kolbenstange Querkräfte auf die Kolbenstange ausgeübt, welche die Dichtung und Führung des Kolbens im Inneren des Zylinders beeinträchtigen könnten. Dadurch sind Längs- und Querführungen für das Getriebe notwendig, die sehr aufwendig sind und in einem hohen Platzbedarf resultieren. Auch der Ausleger selbst benötigt ein hohes Maß an Platz, so daß der Linearantrieb insgesamt quer zu der Längsrichtung des Zylinders sehr breit baut, außerdem ergibt es sich, daß die erforderliche Gehäuselänge groß ist, wobei sie das durch die voll ausgefahrene Stellung der Kolbenstange vorgegebene Maß übersteigt. Ein weiterer Nachteil ist in der Belastung der Kolbenstange in Längsrichtung zu sehen, wodurch insbesondere bei langen Hüben Knickgefahr besteht, die Hublänge somit beschränkt ist. Auch bei der Positionierung des Mitnehmers ergeben sich Probleme, da sich bei gleichem Betriebsdruck in beiden Bewegungsrichtungen unterschiedliche Bewegungsgeschwindigkeiten einstellen. Insbesondere sind für eine gleichförmige Bewegung in beiden Bewegungsrichtungen unterschiedliche Hubkräfte erforderlich, deren Realisierung einen gewissen Aufwand erfordert. Ähnlich ist auch die Veröffentlichung SU-723 239 in « Soviet Inventions Illustrated », Sektion PQ, Woche C 45, 17. Dezember 1980, zu bewerten. Auch die Anordnung nach der AT-PS 243 038 macht infolge der zwei Kolben und der entsprechend größeren Anzahl von Arbeitsräumen einen zusätzlichen Aufwand von Bauelementen und auch hinsichtlich der Fertigung und des in Anspruch genommenen Raumes erforderlich, bei maximaler Auslenkung der Kolbenstange ergibt sich eine sehr grosse Baulänge. Weiterhin erscheint die Durchführung von langen Hüben schon wegen der Knickgefahr unvorteilhaft.

Aufgabe der vorliegenden Erfindung ist es demgegenüber, eine Linearantriebsanordnung der gattungsgemäßen Art so zu verbessern, daß er kompaktere Bauweise und einfacheren Aufbau, also weniger Bauelemente, bei kostengünstiger Herstellung besitzt und darüberhinaus auch für längere Hübe und höhere Hubkräfte geeignet ist.

Diese Aufgabe wird erfindungsgemäß dadurch gelöst, daß die Kolbenstange des Hubzylinders in Längsrichtung gegenüber dem Gestell ortsfest angelenkt ist, daß der zugehörige Zylinder selbst das Antriebsteil bildet, daß die Rollen an axialen Endbereichen des Zylinders gehaltert sind und daß der Zylinder mit Führungsflächen mit seinen axialen Endbereichen allseitig formschlüssig an einer gegenüber dem Gestell ortsfesten Längsführung geführt ist.

Die Erfindung geht also von der komplizierten Bauform einer mit einem Ausleger versehenen Kolbenstange ab und verwendet den Zylinder als Träger für das Umschlingungsgetriebe zur Hubübersetzung. Der Zylinder ist hier das angetriebene Teil, während die Kolbenstange ortsfest festgelegt ist. Diese Bauform macht zunächst das Versehen der Kolbenstange mit einem Ausleger überflüssig, und spart so an Baubreite. Weiterhin kann dem Gehäuse des erfindungsgemäßen Linearantriebs eine Länge verliehen werden, die dem durch den Hub des Arbeitszylinders vorgegebenen Maß genau entspricht, und der Aufhängepunkt des Mitnehmers an dem Umschlingungsgetriebe bewegt sich in sehr guter Näherung über diese volle Gehäuselänge. Die Baulänge des Erfindungsgegenstandes ist somit im Verhältnis zu dem erzielten Hub relativ gering. Dadurch erhält man aber gleichzeitig den Vorteil einer kompakten Bauweise. Ein weiterer Vorteil liegt in der Verminderung von Querkräften, die vom Mitnehmer übertragen werden, da die Rollen des Umschlingungsgetriebes an axialen Endbereichen des Zylinders gehaltert sind. Dadurch ergibt sich eine wesentlich weniger komplizierte und weniger aufwendige Führung des Trägers für das Getriebe, so daß spezielle Rollenhalter und Schienenführungen beim Erfindungsgegenstand nicht erforderlich sind. Falls geringe Querkräfte auftreten, so sind diese von den Längskräften getrennt, da der Mitnehmer an Gehäuse geführt ist und der Zylinder an der Kolbenstange. Eine ungünstige Überlagerung der beanspruchenden Kräfte wird so verhindert. Auch wird der Getrieberäger, d. h. der Zylinder, nicht in Längsrichtung und vor allem nicht auf Knicken belastet, wodurch sehr große Hublängen möglich sind. Vorteilhafterweise ist der Aufbau des Erfindungsgegenstandes einfacher, dadurch der Herstellungsaufwand geringer und die Herstellung selbst kostengünstiger. Dies resultiert insbesondere aus der einfachen Führung des Zylinders, an dem unmittelbar der Mitnehmer angeordnet ist. Der erfindungsgemäße Linearantrieb läßt sich so mit weniger Bauelementen verwirklichen.

Durch die vorteilhaften Maßnahmen nach Anspruch 2 und den folgenden Unteransprüchen wird ohne Aufwand eine sichere Führung des Zylinders gewährleistet, die gleichzeitig etwaige auftretende Querkräfte aufnimmt. Dies ist insbesondere von Vorteil, wenn der Linearantrieb gemäß Anspruch 4 eine einseitig angelenkte Kolbenstange enthält. Hierzu werden noch die Endbereiche des Zylinders als Gleitlagerkörper ausgebildet, um einen einwandfreien Lauf des Zylinders im Innern des Gehäuses zu gewährleisten. Ein weiterer Vorteil liegt darin, daß zumindest in einer Hubrichtung, sehr hohe Hubkräfte realisiert werden können, da durch das einseitige Anlenken der Kolbenstange auf einer Kolbenseite eine größere beaufschlagbare Kolbenfläche des Zylinders entsteht. Aus Anspruch 5 ergibt sich weiterhin der Vorteil einer sicheren Längsführung des Zylinders, gleichzeitig wird durch die beidseitig gleiche beaufschlagbare Kolbenfläche des Zylinders bei gleichem Betriebsdruck in beiden Bewegungsrichtungen die gleiche Geschwindigkeit und die gleiche Hubkraft ermöglicht. Dadurch kann mit konstanter Druckversorgung in beiden Bewegungsrichtungen eine gleich geartete Bewegung ausgeführt werden, wodurch insbesondere die Positionierung erleichtert ist.

Die Maßnahme nach Anspruch 6 und den folgenden Unteransprüchen bewirkt eine Entlastung des Zylinders und der Kolbenstange von Querkräften, eine besonders stabile, reibungsarme Führung des Mitnehmers und sichert diesen gleichzeitig gegen ein Verkanten, außerdem erreicht man eine besonders stabile, gegen Querkräfte des Umschlingungsgetriebes gesicherte Führung des Mitnehmers.

Nachstehend sind besonders vorteilhafte Ausführungen des oben beschriebenen Linearantriebs mit Bezug auf die Zeichnungen näher erläutert.

Figuren 1 bis 3 zeigen schematisch eine erste Ausführungsform des Linearantriebs mit einseitig verankerter Kolbenstange ;

Figuren 1 und 2 sind Schnitte entlang der Linie I-I von Fig. 3 in den beiden Endstellungen des Hubzyliders ;

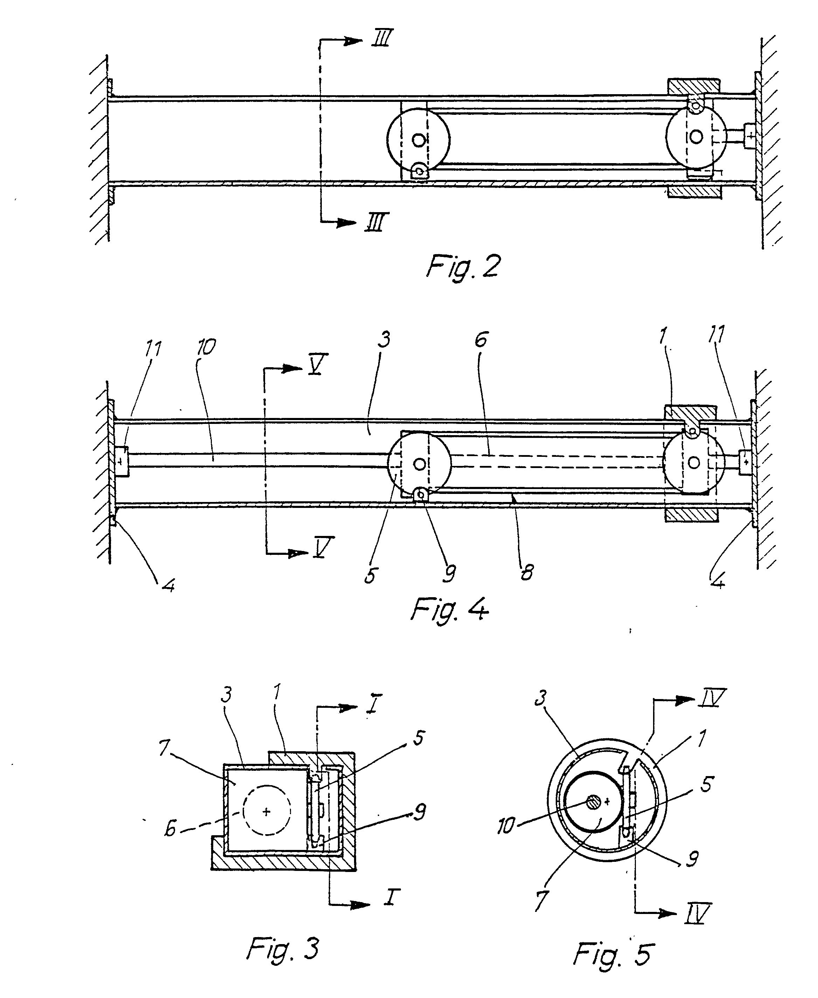

Figur 3 ist ein Schnitt entlang der Linie III-III von Fig. 2 ;

Figuren 4 und 5 zeigen schematisch eine zweite Ausführungsform des Linearantriebs mit zweiseitig verankerter Kolbenstange ;

Figur 4 ist ein Schnitt entlang der Linie IV-IV von Fig. 5 ;

Figur 5 ist ein Schnitt entlang der Linie V-V von Fig. 4 ;

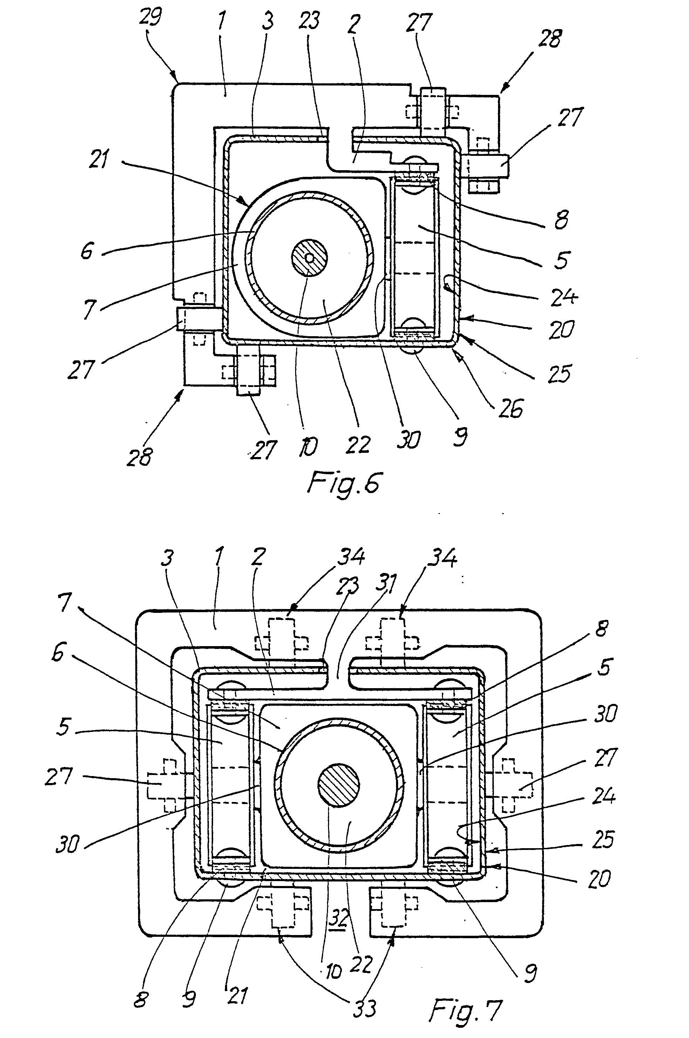

Figuren 6 bis 9 zeigen Detailansichten verschiedener Ausführungsformen des Linearantriebs in einem Fig. 3 oder Fig. 5 entsprechenden Schnitt.

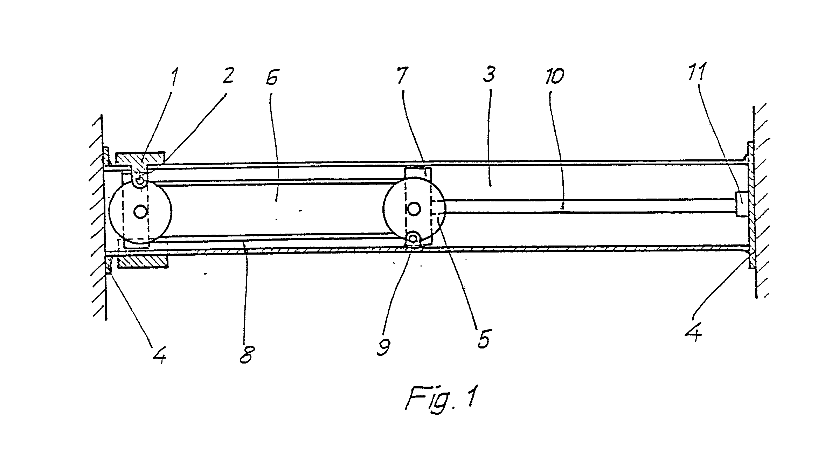

Bezugnehmend nunmehr auf Fig. 1 und 2 kann der Mitnehmer 1 als linear bewegbares Gleit- oder Wälzlager ausgebildet sein und verfügt über geeignete, in der Zeichnung nicht dargestellte Kupplungseinrichtungen für den oder die anzutreibenden Teile. Der Mitnehmer 1 ist am geschlitzten Hohlprofil 3 geführt. Wie aus dem in Fig. 3 dargestellten Schnitt entlang der Linie III-III der Fig. 2 hervorgeht, ist das Hohlprofil 3 bei der hier beschriebenen Ausführung ein Rechdteckrohr. Das Hohlprofil 3 ist das tragende Element des Linearantriebs und bestimmt im wesentlichen dessen äußere Abmessungen. Es nimmt Querkräfte auf, welche über den Mitnehmer auf das System übertragen werden. An den Enden des Hohlprofils 3 sind vorzugsweise Befestigungsplatten 4 anzubringen, welche eine zweckmäßige Montage des Linearantriebs erlauben. Die Lasche 2 des Mitnehmers 1 reicht durch den Schlitz des Hohlprofils 3 und ist im Innern mit dem Hubübersetzungsgetriebe fest verbunden. Das Hubübersetzungsgetriebe bekannter Art besteht im wesentlichen aus zwei Rollen 5, die am Rollenträger, mindestens im Abstand des zu übersetzenden Hubes, befestigt sind, wobei die Funktion des Rollenträgers dem Zylinder 6 zufällt, an dessen Zylinderdeckel 7 die Rollen 5 seitlich mittels starrer Achsen gehalten sind. Die seitliche Befestigung ist allerdings für die Erfindung nicht zwingend ; die Rollen 5 können vielmehr auch stirnseitig an den Zylinderdeckeln 7 befestigt sein, aber immer seitlich außerhalb der Längserstreckung der Kolbenstange. Weiter besteht das Getriebe aus einem die Rollen umlaufenden Seil 8, welches einerseits fest mit der Lasche 2 und andererseits mit einer Verankerung 9 am Hohlprofil 3 verbunden ist. Anstelle eines Seiles können selbstverständlich auch Ketten, Stahlbänder, Zahnriemen und dgl. treten. Anstelle der Rollen sind auch Gleitführungen für Rollenketten denkbar, und grundsätzlich alle möglichen Umlenkvorrichtungen für Zugmittel. Die Längsführung des bewegbaren Zylinders 6 ist durch die Innenfläche des Hohlprofils 3 gegeben. Es ist vorteilhaft, die Zylinderdeckel 7 beispielsweise auf drei Seiten als Gleitlager auszubilden. Die Kolbenstange 10 des Zylinders 6 ist mit ihrem Ende an einer Haltevorrichtung 11 gehalten, welche ihrerseits an der der Kolbenstange 10 zugewandten Befestigungsplatte 4 befestigt ist.

Die Fig. 1 zeigt den Linearantrieb mit ausgefahrener Kolbenstange. Wird der Hubzylinder 6 mit einem Druckmittel beaufschlagt, was beispielsweise mittels Spiralschläuchen geschehen kann, so bewegt sich der Zylinder 6 in die aus der

Fig. 2 ersichtliche Position mit eingefahrener Kolbenstange 10. Der Fachmann erkennt sofort, daß der Hub des Zylinders 6 über das Hubübersetzungsgetriebe bei diesem Vorgang im Verhältnis 1 : 2 auf den Mitnehmer 1 übertragen wird. Der Bewegungsablauf ist natürlich auch umkehrbar.

In Fig. 4 und 5 sind äquivalente Teile mit denselben Bezugszeichen versehen wie in Fig. 1 bis 3.

Die Ausführung eines Linearantriebs nach den Fig. 4 und 5 unterscheidet sich gegenüber der erstgenannten Ausführung im wesentlichen aufgrund der durchgehenden Kolbenstange 10, welche mit beiden Enden an einer Haltevorrichtung 11 fest mit den Befestigungsplatten 4 verbunden ist. Damit übernimmt die Kolbenstange 10 die Funktion einer Längsführung für den Zylinder. Es ist offensichtlich, daß die Zylinderdeckel 7 bei dieser Ausführung keine Gleitlagerfunktion zu übernehmen brauchen. Diese Lösung stellt deshalb an die Qualität der Oberfläche auf der Innenseite des Kohlprofils 3 keine Ansprüche. Zudem kann angenommen werden, daß das Hohlprofil 3 mit weit höheren Querkräften belastet werden darf, als dies die erste Ausführung erlaubt, ohne dadurch den Lauf des Zylinders 6 zu behindern.

Wesentliche Merkmale der beschriebenen Linearantriebe sind : sehr kompakte Bauweise, wenig Bauteile, einfache Konstruktion und eine hohe Aufnahmefähigkeit äußerer Querkräfte, weitgehende Unempfindlichkeit gegen Verschmutzung. Außerdem wirken auf den Getriebeträger keine Knickbelastungen. Bei Ausführungen mit durchgehender Kolbenstange wirken selbst am Kolbenträger keine Knickbelastungen, somit sind sehr lange Hübe möglich.

Es sind viele Ausführungen für einen Linearantrieb denkbar, ohne den Gedanken der Erfindung zu verlassen. Erwähnt sei lediglich noch die Möglichkeit, den Hubzylinder oder beispielsweise die rotierenden Teile des Hubübersetzungsgetriebes mit bekannten positionsgebenden und geschwindigkeitsregulierenden Einrichtungen zusammenwirken zu lassen. Damit eröffnen sich viele Einsatzgebiete für den Linearantrieb, insbesondere als Handhabungsgerät.

Bezugnehmend nunmehr auf Fig. 6 bis 9 sind Ausführungsbeispiele des erfindungsgemäßen Linearantriebs in nähren technischen Einzelheiten dargestellt. Die Ansicht entspricht dabei jeweils dem Schnitt durch den Linearantrieb entlang der Linien III-III von Fig. 2 bzw. V-V von Fig. 4. Die dargestellten Bauformen können wahlweise mit einseitig oder zweiseitig verankerter Kolbenstange Verwendung finden.

Fig. 6 zeigt einen erfindungsgemäßen Linearantrieb mit einem Gehäuse 20 und einem darin enthaltenen, hydraulischen Hubzylinder, der insgesamt mit 21 bezeichnet ist. Der Zylinder 6 des Hubzylinders 21 schließt einen Kolben 22 ein, der auf einer Kolbenstange 10 gehalten ist und dichtend im Inneren des Zylinders 6 gleitet. Man erkennt weiterhin einen der beiden Zylinderdeckel 7, die den Hubzylinder 21 beidseits abschließen und zusammen mit dem Kolben im Inneren des Hubzylinders 21 zwei Arbeitskammern abteilen. Diese werden wahlweise mit einem hydraulischen oder pneumatischen Arbeitsmedium beaufschlagt, um eine Antriebsbewegung zwischen dem Kolben 22 und dem Zylinder 6 zu erzeugen. Statt eines hydraulischen oder pneumatischen Hubzylinders kann aber auch ein elektrischer Hubzylinder Verwendung finden, der einen elektromotorgetriebenen Spindeltrieb enthält und als « Elektrozylinder » bekannt ist, die Spindel ist dabei dem Kolbenträger gleichzusetzen. In jedem Fall wird die erzeugte Antriebskraft über ein Hubübersetzungsgetriebe auf einen linear bewegbaren Mitnehmer 1 übertragen. Einem Kerngedanken der vorliegenden Erfindung gemäß ist dabei die Kolbenstange 10 mit dem Kolben 22 unbewegbar fest in dem Gehäuse 20 angeordnet, wohingegen der Zylinder 6 längsgeführt bewegbar ist und das Hubübersetzungsgetriebe trägt.

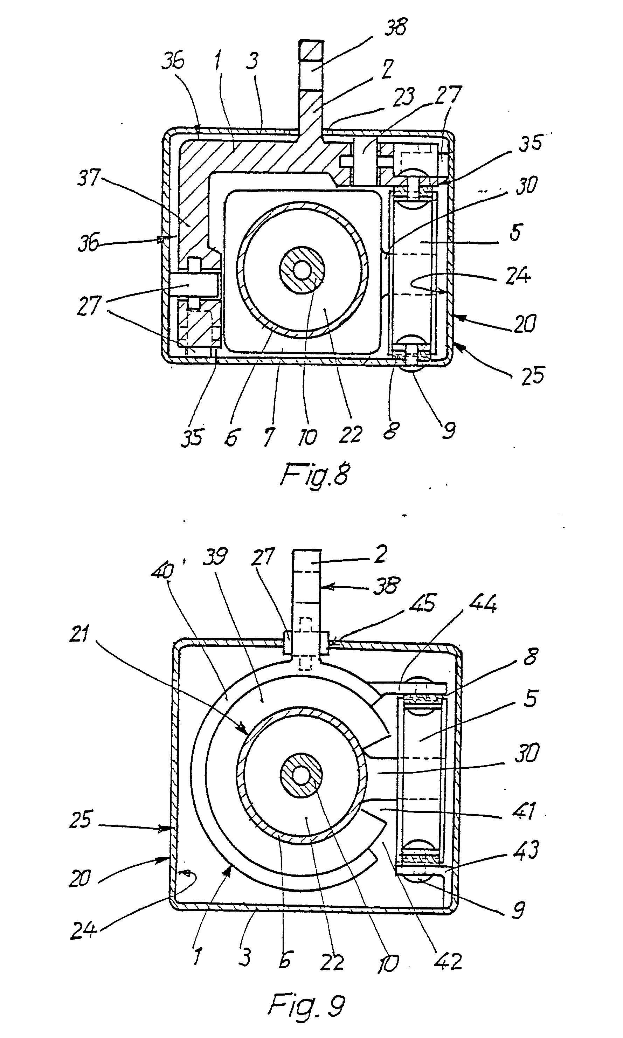

Das Gehäuse 20 gemäßt Fig. 6 ist ein geschlitztes Hohlprofil. Der entsprechende Schlitz 23 erstreckt sich in Bewegungsrichtung des Mitnehmers 1 und über die volle lineare Erstreckung seines Stellwegs. Durch den Schlitz 23 ragt eine Lasche 2 hindurch, die mit dem Hubübersetzungsgetriebe verbunden ist. Durch das Hubübersetzungsgetriebe und die Lasche 2 erfolgt der Antrieb des Mitnehmers 1, der für seine Linearbewegung an dem Gehäuse 20 geführt ist. Die Führung kann dabei entweder gemäßt Fig. 6 und Fig. 7 an der Außenseite 25 des Gehäuses 20, oder aber gemäß Fig. 8 an der Innenseite 24 des Gehäuses 20 erfolgen. Mit Bezug weiterhin auf Fig. 6, hat das hohlprofilförmige Gehäuse einen rechteckigen Querschnitt. Der Mitnehmer 1 ist ein dieser Kontur angepaßter Bügel, der das Gehäuse 20 an allen Außenflächen übergreift und mit Spiel in sich aufnimmt. Für eine reibungsarme Führung des Mitnehmers 1 sorgen Räder 27, die exemplarisch auch für Rollen, Walzen o.ä. abrollende Körper stehen. Die Räder 27 sind im Bereich zweier diagonal gegenüberliegender Ecken 28 des bügelförmigen Mitnehmers 1 angeordnet und um 90° versetzt gegen die Außenseiten 25 des Gehäuses 20 abgestützt. Eine dritte Ecke 29 des Bügels ist dagegen von Rädern frei, und an der verbleibenden Ecke im Bereich einer Längskante 26 des Gehäuses 20 ist der Bügel offen. Über die Tiefe des Mitnehmers 1 senkrecht zu der Zeichenebene von Fig. 6 liegen mehrere Räder 27 in fluchtender Anordnung hintereinander, so daß der Mitnehmer 1 auch gegen ein Verkanten gesichert ist. Man erkennt, daß in der beschriebenen Anordnung eine besonders stabile, reibungsarme Führung des Mitnehmers 1 an der Außenseite 25 des Gehäuses 20 gewährleistet wird.

Fig. 6 läßt weiterhin eine der Rollen 5 des Hubübersetzungsgetriebes erkennen. Die Rollen 5 sind in festem Abstand zueinander an dem Zylinder 6 des Hubzylinders 21 befestigt. Sie sitzen dabei auf Achsen 30 auf, die quer zu der Zylinder-Längsrichtung, d. h. der Bewegungsrichtung des Mitnehmers 1, orientiert sind. Die Achsen 30 sind ihrerseits an den Zylinderdeckeln 7 gehaltert, die den Zylinder 6 beidseits verschließen. Über die Rollen 5 läuft ein Zugmittel, und insbesondere ein Seil 8, das sowohl mit dem Gehäuse 20 als auch mit dem Mitnehmer 1 verbunden ist. Zur Montage an das Gehäuse 20 dient dabei die Verankerung 9, und die Verbindung mit dem Mitnehmer 1 wird über die Lasche 2 hergestellt. Gemäß Fig. 6 sind die Rollen 5 mit dem Zugmittel 8 in einem randnahem Abschnitt des Gehäuses 20 neben dem Hubzylinder 21 angeordnet ; hingegen verläuft der Schlitz 23 für die Lasche 2 vorzugsweise etwa mittig auf einer der Flächen des Gehäuses 20. Zur Befestigung an dem Zugmittel 8 ist daher die Lasche 2 abgewinkelt und an ihrem Befestigungsende überdies abgestuft. Das Hubübersetzungsgetriebe weist nur ein einziges, seitlich von dem Hubzylinder 21 angeordnetes Rollenpaar 5 mit zugehörigem Seil 8 auf, mit dem die einseitig abgewinkelte Lasche 2 in Verbindung steht. Durch die außermittige, asymmetrische Anordnung des Hubübersetzungsgetriebes treten zwar im Betrieb Querkräfte am Mitnehmer 1 auf ; diese werden aber in den allermeisten Anwendungsfällen problemlos von dem Hohlprofil des Gehäuses 20 aufgenommen.

Nur im Fall besonders großer Zugkräfte, die sich insbesondere im hydraulischen Betrieb realisieren lassen, kann eine Verdoppelung des Hubü-bersetzungsgetriebes von Vorteil sein. Be-zugnehmend auf Fig. 7, ist beidseits des Hubzylinders 21 je ein Rollenpaar 5 angeordnet, über das jeweils ein eigenes Zugseil 8 umläuft. Die Rollenpaare 5 befinden sich in symmetrischer Anordnung an einander gegenüberliegenden Seiten des Hubzylinders 21. Beide Zugseile 8 sind jeweils für sich an Verankerungen 9 fest mit dem Gehäuse 20 verbunden, und der Mitnehmer 1 greift an beiden Zugseilen 8 an. Hierzu dient eine T-förmige Lasche 2, deren ausladende Seiten sich übe den Hubzylinder 21 hinweg beidseits oberhalb des Hubübersetzungsgetriebes erstrecken und mit den Zugseilen 8 in geeigneter Weise verbunden sind. Der Fuß 31 der T-förmigen Lasche 2 ragt wiederum durch den Schlitz 23 in dem Gehäuse 20 hindurch und ist an den Mitnehmer 1 angeformt, der auf der Außenseite 25 des Gehäuses 20 geführt ist. Es findet wiederum eine Führung durch Räder 27 statt, deren Anordnung aber gegenüber dem zuvor beschriebenen Ausführungsbeispiel modifiziert ist.

Auch der Mitnehmer 1 gemäß Fig. 7 hat eine Bügelform ; er ist aber an der der Lasche 2 gegenüberliegenden Längsseite offen. Die Bügelöffnung 32 liegt etwa mittig bezüglich des Gehäuses 20. Beidseits der Bügelöffnung 32 ist ein Räderpaar 33 zu erkennen, bei dem die Achsen der zugehörigen Räder 27 fluchten. Ein entsprechendes Räderpaar 34 ist auch auf der gegenüberliegenden Seite beidseits der Lasche 2 angeordnet. An den Querseiten des Mitnehmers 1 ist hingegen jeweils nur ein einzelnes Rad 27 zu erkennen. Wohlgemerkt können aber für jedes dargestellte Rad 27 über die Tiefe des Mitnehmers 1 senkrecht zur Zeichnebenen eine ganze Reihe von Rädern 27 liegen. Diese stützen sich jeweils an der Außenseite 25 des Gehäuses 20 ab, wobei die Auflagepunkte einander symmetrisch gegenüberliegen. Man erreicht auf diese Art eine besonders stabile, gegen Querkräfte des Hubübersetzungsgetriebes gesicherte Führung des Mitnehmers 1. Die Verdoppelung des Hubübersetzungsgetriebes beidseits des Hubzylinders 21 bewirkt überdies, daß sich derar-tige Querkräfte wenigstens teilweise kompensie-ren und die Belastung sämtlicher Bauteile klein bleibt. Dies gilt natürlich in besonderem Maße für die beiden Zugseile 8, auf die sich die bei Betätigung des Hubzylinders 21 auftretenden Zugkräfte annähernd hälftig verteilen.

Bei der Ausführungsform gemäß Fig. 7 setzen die die Rollen 5 tragenden Achsen 30 in fluchtender Anordnung beidseits an den Zylinderdeckeln 7 an. Wie auch in Fig. 6, besteht ein Abstand zwischen den Zylinderdeckeln 7 und der Innenwand 24 des Gehäuses 20, und ebenso zu den übrigen Bauteilen des Linearantriebs außerhalb des Hubzylinders 21. Dasselbe gilt für den Zylinder 6 des Hubzylinders 21 selbst ; der Zylinder 6 ist zusammen mit den Zylinderdeckeln 7 im Abstand zu den Innenwänden 24 des Gehäuses 20 verschiebbar. Die Verschiebebewegung erfolgt bei Beaufschlagung des Hubzylinders 21 entlang der Kolbenstange 10. Der Zylinder 6 ist dabei ausschließlich an dem Kolben 22 geführt. Wie erwähnt, ist in dieser Anordnung eine stabile Abstützung der Kolbenstange 10 an beiden Enden des Gehäuses 20 zu empfehlen.

Fig. 8 zeigt eine weitere Ausführungsform des erfindungsgemäßen Linearantriebs, bei der der Mitnehmer 1 im Innern des Gehäuses 20 geführt ist. Von diesem Mitnehmer 1 ragt nur die Lasche 2 durch den Schlitz 23 des Gehäuses 20 nach außen ; sämtliche anderen Teile des Linearantriebs sind hingegen im Innern des Gehäuses 20 integriert. Diese sehr kompakte, geschlossene Bauform bietet einen optimalen Schutz gegen den Einfluß von Schmutz oder aggressiven Medien. Das Gehäuse 20 ist in dem dargestellten Ausführungsbeispiel wiederum rechteckig konturiert, und es ist ein Hubübersetzungsgetriebe mit einem einzigen, seitlich von einem Hubzylinder 21 vorgesehenen Rollenpaar 5 vorgesehen. Es sei aber angemerkt, daß diese Anordnung für die Innenführung des Mitnehmers 1 in keiner Weise zwingend ist ; insbesondere kann für diesen Zweck auch ein kreiszylindrisches Gehäuse 20 und/oder ein in der Rollenzahl verdoppeltes, beidseits des Hubzylinders 21 angeordnetes Hubübersetzungsgetriebe Verwendung finden (nicht dargestellt). Entsprechend der rechteckigen Kontur des Gehäuses 20, hat der Mitnehmer 1 eine im wesentlichen L-förmige Gestalt. Jeweils an den Stirnseiten 35 des L-Profils sowie an den Außenflächen 36 der L-Schenkel 37 sind Räder 27 angeordnet, die sich gegen die Innenseiten 24 des Gehäuses 20 abstützen. Der Mitnehmer 1 ist dabei so dimensioniert, daß er mit Spiel über Eck in das Innere des Gehäuses 20 paßt und dabei mit seinen Rädern 27 an sämtlichen Innenwänden 24 des rechteckigen Hohlprofils zu liegen kommt. Wohlverstanden kann wiederum für jedes der dargestellten Räder 27 über die Tiefe des Mitnehmers 1 verteilt eine Reihe von in Blickrichtung fluchtenden Rädern 27 vorgesehen sein, die den Mitnehmer 1 auch gegen ein Verkanten in dem Gehäuse 20 sichern. Einer der L-Schenkel 37 ragt in den Bereich über das Hubübersetzungsgetriebe und ist mit dem zugehörigen Zugmittel 8 verbunden, das zugleich bei 9 an dem Gehäuse 20 verankert ist. Der Hubzylinder 21 ist zusammen mit dem Hubübersetzungsgetriebe in der L-Öffnung des Mitnehmers 1 aufgenommen. Der Zylinder 6 des Hubzyliders 21 läuft dabei mit Spiel im Abstand sowohl von dem Gehäuse 20 als auch von dem Mitnehmer 1 ; der Zylinder 6 ist dazu wiederum nur allein auf dem ortsfest angeordneten Kolben 22 verschiebbar gelagert. Der aus der Bewegung des Zylinders 6 abgeleitete lineare Vorschub des Mitnehmers 1 kann auf verschiedenste, zu betätigende Elemente übertragen werden ; hierzu ist an der aus dem Gehäuse 20 herausragenden Lasche 2 eine oder mehrere Montagebohrungen 38 vorgesehen, in der ein passendes Gegenstück des zu betätigenden Elements aufgenommen und insbesondere verschraubt werden kann.

Fig. 9 zeigt schließlich eine alternative Form der Lagerung des Mitnehmers 1. Der Mitnehmer 1 ist sowohl an dem Gehäuse 20 als auch an dem Zylinder 6 des Hubzylinders 21 geführt. Der Hubzylinder 21 hat einer kreisförmigen Querschnitt, und der Mitnehmer 1 weist eine geschlitzte Kugellaufbüchse auf, die auf dem Zylinder 6 des Hubzylinders 21 abrollt. Der Mitnehmer 1 umgreift die Kugellaufbüchse 39 mit einem segmentierten Ringbügel 40, wobei der Schlitzbereich 41 der Kugellaufbüchse 39 und der Ausschnitt 42 des Ringbügels 40 übereinander zu liegen kommen. Die segmentierte Bauweise ist erforderlich, um die Rollen 5 des Hubübersetzungsgetriebes an dem Zylinder 6 befestigen zu können. Die Achsen 30 der Rollen 5 setzen im Schlitzbereich 41 der Kugellaufbüchse 39 an dem Zylinder 6 des Hubzylinders 21 an. Über die Rollen 5 läuft wiederum ein Zugseil 8 um, das über einen Winkel 43 an dem Gehäuse 20 fest verankert ist. Eine weitere Verbindung des Zugseils 8 besteht mit dem Mitnehmer 1 über einen Träger 44, der an dem Ringbügel 40 ansetzt und das Hubübersetzungsgetriebe übergreift. An dem Ringbügel 40 ist weiterhin eine Lasche 2 angeformt, die durch einen Schlitz 23 aus dem Gehäuse 20 herausragt. Um den Mitnehmer 1 gegen ein Verdrehen auf der Kugellaufbüchse 39 zu sichern, trägt die Lasche 2 wenigstens ein Rad 27, das an einer geeigneten Schiene entlangläuft ; in einer besonders einfachen Anordnung kann sich das Rad 27 gegen die Seitenkanten 45 des Schlitzes 23 abstützen, durch den die Lasche 2 hindurchragt.

Die Linearantriebe gemäß Fig. 6 bis 9 zeigen zwar alle eine Fükrung des Zylinders 6 durch den Kolben 22 auf der Kolbenstange 10. Sehr ähnliche Bauformen können aber auch Verwendung finden, wenn eine oder mehrerde Innenwände 24 des Gehäuses 20 als Führungsfläche für den Zylinder 6 ausgebildet sind. Insbesondere können in diesem Fall die den Zylinder 6 beidseits verschließenden Zylinderdeckel 7 als Gleitlager ausgebildet sein, die an der Führungsfläche entlanglaufen. Weiterhin ist auch die Ausbildung des Gehäuses 20 als rechteckiges Hohlprofil zumindest für einen Teil der beschriebenen Bauform nicht zwingend ; das Hohlprofil kann ebenso auch einen kreiszylindrischen Querschnitt aufweisen und ein entsprechend kreisringförmiger Mitnehmer auf der Innen- oder Außenwand des Hohlprofils entlanggleiten. Eine schematische Darstellung diese Anordnung gibt Fig. 3.

Durch die Erfindung wird in verschiedenen Bauformen ein präzise arbeitender, gut geschützter Linearantrieb geschaffen. Durch die Anordnung des Hubübersetzungsgetriebes auf einem beweglichen Zylinder 6 bei ortsfestem Kolben 22 baut der erfindungsgemäße Linearantrieb extrem kompakt. Es ist möglich, die Rollen 5 des Übersetzungsgetriebes in einem Abstand an dem Zylinder 6 anzubringen, der dem Kolbenhub des Hubzylinders 21 entspricht. Die resultierende Baulänge des Linearantriebs übersteigt dadurch die doppelte Kolbenhublänge nur allenfalls geringfügig ; die Baulänge ist also etwa gleich der Hubstrecke des Mitnehmers. In der Ausführung mit einer an beiden Enden des Gehäuses 20 verankerten Kolbenstange 10 ist der das Hubübersetzungsgetriebe tragende Zylinder 6 in jeder Stellung optimal geführt. Selbst eine exzentrische Krafteinleitung auf den Zylinder 6 durch ein einseitig angeordnetes Hubübersetzungsgetriebe kann von der Kolbenstange 10 problemlos aufgenommen werden. Durch die bevorzugte Anordnung einer durchgehenden, beidseits gelagerten Kolbenstange erreicht man schließlich den besonderen Vorteil, daß die Kraft im Rücklauf gleich der im Vorlauf ist.

Liste der Bezugszeichen

1 Mitnehmer
2 Lasche
3 Hohlprofil
4 Befestigungsplatte
5 Rolle
6 Zylinder
7 Zylinderdeckel
8 Seil
9 Verankerung
10 Kolbenstange
11 Haltevorrichtung
20 Gehäuse
21 Hubzylinder
22 Kolben
23 Schlitz
24 Innenseite von 20
25 Außenseite von 20

26 Längskante von 20
27 Rad
28 Ecke von 1 mit 27
29 Ecke von 1
30 Achse
31 Fuß
32 Bügelöffnung
33 Räderpaar bei 32
34 Räderpaar bei 23
35 Stirnseite
36 Außenfläche
37 L-Schenkel
38 Montagebohrung
39 Kugellaufbüchse
40 Ringbügel
41 Schlitzbereich von 39
42 Ausschnitt von 40
43 Winkel
44 Träger
45 Seitenkante

## Patentansprüche

1. Linearantrieb mit einem als festen Bezug dienenden Gestell (20) und mit einem z. B. pneumatischen Hubzylinder (21), der einen linear bewegbaren Mitnehmer (1) in Längsrichtung antreibt, wobei an einem relativ zu dem Gestell beweglichen Antriebsteil (6) des Hubzylinders ein geschlossenes Umschlingungsgetriebe (5, 8) vorgesehen ist, das in festem Abstand zueinander angeordnete Umlenkvorrichtungen, z. B. Rollen (5), mit quer zu der Zylinderlängsrichtung orientierten Achsen enthält, über die ein Zugmittel (8) läuft, das gegenüber dem Gestell ortsfest ist und am Mitnehmer angelenkt ist, dadurch gekennzeichnet, daß die Kolbenstange (10) des Hubzylinders (21) in Längsrichtung gegenüber dem Gestell (20) ortsfest angelenkt ist, daß der zugehörige Zylinder (6) selbst das Antriebsteil bildet, daß die Umlenkvorrichtungen, z. B. Rollen (5) an axialen Endbereichen (7) des Zylinders (6) gehaltert sind und daß der Zylinder (6) mit Führungsflächen an seinen axialen Endbereichen (7) allseitig formschlüssig an einer gegenüber dem Gestell (20) ortsfesten Längsführung (10, 20) geführt ist.

2. Linearantrieb nach Anspruch 1, dadurch gekennzeichnet, daß das Gestell ein längsgeschlitztes Gehäuse (20) bildet, in dem der Hubzylinder enthalten ist, wobei das Gehäuse (20) auch die Längsführung für den Zylinder (6) bildet.

3. Linearantrieb nach einem der Ansprüche 1 oder 2, dadurch gekennzeichnet, daß über den ganzen Hubbereich des Zylinders (6) die Rollen (5) den Anlenkpunkt des Zugmittels am Gestell nicht überfahren.

4. Linearantrieb nach einem der Ansprüche 1 bis 3, dadurch gekennzeichnet, daß an der Innenwand des Gehäuses bzw. Gestells Führungsflächen ausgebildet sind und die Kolbenstange (10) einseitig angelenkt ist und die Endbereiche (7) des Zylinders (6) (Zylinderdeckel) Gleitlagerkörper bilden, die unmittelbar an der Innenwand (24) des Gehäuses bzw. Gestells (20) laufen.

5. Linearantrieb nach einem der Ansprüche 1 bis 3, dadurch gekennzeichnet, daß die Längsführung durch eine durchgehend ausgebildete Kolbenstange (10) gebildet wird, die an beiden Enden angelenkt ist.

6. Linearantrieb nach einem der Ansprüche 1 bis 5, dadurch gekennzeichnet, daß das Gestell (20) unmittelbar zur Führung des Mitnehmers (1) dient.

7. Linearantrieb nach Anspruch 6, dadurch gekennzeichnet, daß der Mitnehmer (1) ein das Gestell (20) an allen Außenflächen übergreifenden Bügel (48, 49) ist.

8. Linearantrieb nach Anspruch 7, dadurch gekennzeichnet, daß der Bügel (48) an einer Längskante (26) des Gestells (20) offen ist und sich im Bereich zweier sich diagonal gegenüberliegender Ecken (28) mit um 90° versetzt angeordneten Rädern gegen das Gestell (20) abstützt.

9. Linearantrieb nach Anspruch 8, dadurch gekennzeichnet, daß der Bügel (48) mit dem Zugmittel (8) über eine T-Lasche (2') verbunden und an der der Lasche (2') gegenüberliegenden Längsseite offen ist und sich mit jeweils seiner Bügelöffnung (32) und der Lasche (2') auf gleicher Achsrichtung angeordneten Räderpaaren (33, 34), sowie an den Querseiten angeordneten Rädern (27) gegen das Gestell (20) abstützt.

10. Linearantrieb nach Anspruch 8, bei dem der Hubzylinder einen kreisförmigen Querschnitt hat, dadurch gekennzeichnet, daß der Mitnehmer (1) eine geschlitzte Kugellaufbüchse (39) aufweist, die mit dem Hubzylinder (21) abrollt.

11. Linearantrieb nach Anspruch 10, dadurch gekennzeichnet, daß die Achsen (30) der Rollen (5) im Schlitzbereich (41) der Kugellaufbüchse (39) an dem Hubzylinder (21) ansetzen.

12. Linearantrieb nach Anspruch 10 oder 11, dadurch gekennzeichnet, daß der Mitnehmer (1) gegen Verdrehung durch Räder (27) gesichert ist, die sich gegen die Seitenkanten (45) des Schlitzes (23) für die Lasche (2) abstützen.

13. Linearantrieb nach einem der Ansprüche 1 bis 12, dadurch gekennzeichnet, daß als Umlenkvorrichtung (5) für das Zugmittel (8) je eine etwa halbkreisförmige Gleitführung für Rollenketten od. dgl. vorgesehen ist.

## Claims

1. A linear drive unit comprising a frame (20) serving as a fixed reference unit and for instance a pneumatic lifting cylinder (21) driving a dog (1) capable of linear motion in an axial direction, an enclosed wrap-around transmission (5, 8) being mounted on a drive component (6) of said lifting cylinder which is movable relative to the frame, said transmission containing guidance means such as rollers (5) arranged at fixed distances with axes oriented at right angles to the axial direction of the cylinder for guiding traction means which are fixed relative to the frame and pivoted at the dog, wherein the piston rod (10) of the lifting cylinder (21) is permanently pivoted relative to the frame (20) in the axial direction, wherein the associated cylinder (6) itself forms the drive unit, wherein the guidance means, for instance rollers (5) are retained at axial end sections (7) of the cylinder (6), and wherein the cylinder (6) is positively guided by means of guide faces of its axial end sections (7) along an axial guide (10, 20) which is fixed relative to the frame (20).

2. A linear drive unit as claimed in Claim 1, wherein the frame is a housing (20) with a longitudinal slot containing the lifting cylinder, the housing (20) simultaneously providing axial guidance for the cylinder (6).

3. A linear drive unit as claimed in Claim 1 or 2, wherein the rollers (5) do not move beyond the pivot point of the traction means at the frame over the entire stroke of the cylinder (6).

4. A linear drive as claimed in any of the preceding claims, wherein guide faces are formed at the internal wall of the housing or frame, the piston rod (10) is pivoted at one end and the end sections (7) of the cylinder (6) (cylinder cover) represent plain bearing bodies running directly on the internal wall (24) of the housing or frame (20).

5. A linear drive unit as claimed in any of Claims 1 to 3, wherein axial guidance is provided by a continuous piston rod (10) pivoted at both ends.

6. A linear drive unit as claimed in any of the preceding claims, wherein the frame (20) directly guides the dog (1).

7. A linear drive unit as claimed in Claim 6, wherein the dog (1) is provided by a hoop (48, 49) surrounding the frame (2) on all outside faces.

8. A linear drive unit as claimed in Claim 7, wherein the hoop (48) is open at a longitudinal edge (26) of the frame (20) and rests against the frame (20) with wheels turned by 90° in the area of two opposing corners (28).

9. A linear drive unit as claimed in Claim 8, wherein the hoop (48) is linked to the traction mans (8) by a T-strap (2') and open at the side opposite the strap (2'), and wherein it rests against the frame (20) with pairs of wheels (33, 34) arranged in the same axial direction as the hoop opening (32) and the strap (2') and with wheels (27) arranged laterally.

10. A linear drive unit as claimed in Claim 8 with a lifting cylinder of circular cross-section, wherein the dog (1) is provided with a slotted spherical liner (39) rolling with the movement of the lifting cylinder (21).

11. A linear drive unit as claimed in Claim 10, wherein the axes (30) of the rollers (5) fasten to the lifting cylidner (21) in the slot area (41) of the spherical liner (39).

12. A linear drive unit as claimed in Claim 10 or 11, wherein the dog (1) is protected against torsion by wheels (27) resting against the lateral edges (45) of the slot (23) for the strap (2).

13. A linear drive unit as claimed in any of the preceding claims, wherein the guidance means (5) for the traction means (8) is provided by approximately semicircular slideways for roller chains or the like.

## Revendications

1. Entraînement linéaire muni d'un châssis (20) servant de garniture fixe et d'un vérin (21), par exemple pneumatique, qui entraîne en direction longitudinale un entraîneur (1) pouvant se mouvoir de façon linéaire, dans lequel, sur une partie d'entraînement (6) du vérin, mobile relativement au châssis, est prévue une transmission d'enlacement fermée (5, 8) qui contient des dispositifs de renvoi, par exemple des poulies (5), disposés à une distance fixe entre eux, à axes orientés transversalement à la direction longitudinale du cylindre et sur lesquels court un moyen de traction (8) qui est à position fixe relativement au châssis et est articulé à l'entraîneur, caractérisé en ce que la tige de piston (10) du vérin (21) est articulée en position fixe en direction longitudinale relativement au châssis (20), en ce que le cylindre adjoint (6) forme lui-même la partie d'entraînement, en ce que les dispositifs de renvoi, par exemple les poulies (5), sont retenus sur des régions terminales axiales (7) du cylindre (6), et en ce que le cylindre (6), en ses régions terminales axiales (7), est guidé rigidement en tous sens, par des surfaces de guidage, sur un guide longitudinal (10, 20) à position fixe relativement au châssis (20).

2. Entraînement linéaire selon la revendication 1, caractérisé en ce que le châssis forme un carter (20) fendu longitudinalement dans lequel est contenu le vérin, le carter (20) formant aussi le guide longitudinal du cylindre (6).

3. Entraînement linéaire selon l'une des revendications 1 et 2, caractérisé en ce que sur toute la région de course du cylindre (6), les poulies (5) ne dépassent pas le point d'articulation du moyen de traction au châssis.

4. Entraînement linéaire selon l'une des revendications 1 à 3, caractérisé en ce que sur la paroi intérieure du carter ou châssis sont constituées des surfaces de guidage, et en ce que la tige de piston (10) est articulée d'un côté et les régions terminales (7) du cylindre (6) (culasses de cylindre) forment des corps de palier lisse qui courent directement sur la paroi intérieure (24) du carter ou châssis (20).

5. Entraînement linéaire selon l'une des revendications 1 à 3, caractérisé en ce que le guide longitudinal est formé par une tige de piston (10) constitué d'un seul tenant, qui est articulée aux deux extrémités.

6. Entraînement linéaire selon l'une des revendications 1 à 5, caractérisé en ce que le châssis (20) sert directement au guidage de l'entraîneur (1).

7. Entraînement linéaire selon la revendication 6, caractérisé en ce que l'entraîneur (1) est un étrier (48, 49) recouvrant le châssis (20) à toutes les surfaces extérieures.

8. Entraînement linéaire, selon la revendication 7, caractérisé en ce que l'étrier (48) est ouvert à un bord longitudinal (26) du châssis (20) et s'appuie contre le châssis (20) dans la région des deux angles (28) opposés diagonalement, par des roues disposées avec décalage de 90°.

9. Entraînement linéaire, selon la revendication 8, caractérisé en ce que l'étrier (48) est relié au moyen de traction (8) par l'intermédiaire d'une patte en T (2') et est ouvert au côté longitudinal opposé à la patte (2') et s'appuie, chaque fois par son ouverture d'étrier (32) et par la patte (2'), sur des paires de roues (33, 34) disposées sur la même direction axiale, ainsi que contre le châssis (20) par les roues (27) disposées aux côtés transversaux.

10. Entraînement linéaire selon la revendication 8, dans lequel le vérin a une section circulaire, caractérisé en ce que l'entraîneur (1) présente une douille de roulement à billes (39) qui se déroule avec le vérin (21).

11. Entraînement linéaire selon la revendication 10, caractérisé en ce que les axes (30) des poulies (5) s'appliquent au vérin (21) dans la région de fente (41) de la douille de roulement à billes (39).

12. Entraînement linéaire selon l'une des revendications 10 et 11, caractérisé en ce que l'entraîneur (1) est assujetti contre la rotation par des roues (27) qui s'appuient contre les bords latéraux (45) de la fente (23) destinée à la patte (2').

13. Entraînement linéaire, selon l'une des revendications 1 à 12, caractérisé en ce que comme dispositif de renvoi (5) pour le moyen de traction (8) est chaque fois prévu un guide de glissement semi-circulaire pour chaînes à rou- leaux ou moyens similaires.

Fig. 1

1

Fig. 2

Fig. 4

Fig. 3

Fig. 5

Fig.6

Fig.7

3

Fig.8

Fig. 9